# FASCICULE DE BREVET EUROPEEN

(11) **EP 0 551 778 B1**
(45) Date de publication et mention de la délivrance du brevet: **15.01.1997**
(21) Numéro de dépôt: 92403370.7
(22) Date de dépôt: 11.12.1992
(51) Int. Cl.: G06K 11/06, G06K 11/20

(54) **Dispositif de gestion multimode d'un curseur sur l'écran d'un dispositif d'affichage**
Vorrichtung zur verschiedenartigen Steuerung eines Cursors auf dem Bildschirm einer Anzeigevorrichtung
Cursor multimode control device for a display tube unit

(30) Priorité: 17.01.1992 FR 9200524
(43) Date de publication de la demande: 21.07.1993
(73) Titulaire: SEXTANT AVIONIQUE, F-92366 Meudon la Forêt Cédex (FR)
(72) Inventeur: Debrus, Marie-Hélène, F-92100 Boulogne Billancourt (FR); Gaultier, Philippe, F-78150 Le Chesnay (FR); Vouillon, Patrick, F-91140 Villebon sur Yvette (FR)
(74) Mandataire: de Saint-Palais, Arnaud Marie

(56) Documents cités:
- DE-A- 3 036 947
- US-A- 4 575 581
- US-A- 4 804 949

## Description

La présente invention concerne un dispositif de gestion multimode d'un curseur sur l'écran d'un dispositif d'affichage associé à un processeur.

D'une façon générale, on sait que pour effectuer un pointage sur un écran, deux modes principaux de pointage sont actuellement proposés, à savoir un mode de pointage dit "relatif" et un mode de pointage dit "absolu".

Le mode de pointage relatif, exploité par les manipulateurs de type "souris" ou "track ball" consiste à envoyer au processeur qui gère l'écran, les coordonnées d'un curseur ou d'un pointeur, exprimées dans un repère ayant pour origine la position de ce curseur ou de ce pointeur. Le déplacement de ce curseur à l'écran est alors commandé par un déplacement homothétique du manipulateur (par exemple un déplacement de la souris sur sa surface de support).

Ce mode de pointage présente notamment les avantages suivants :
- les déplacements du manipulateur peuvent être réalisés en aveugle, l'opérateur n'ayant qu'à regarder l'écran sans se soucier de la position où se trouve le manipulateur ;
- il permet d'atteindre une grande précision, l'opérateur pouvant suivre le trajet du curseur (éventuellement dans une zone de l'écran à échelle agrandie) jusqu'au point désiré.

Par contre, cette solution présente l'inconvénient d'être relativement lente (le temps que met l'opérateur pour amener le curseur d'un emplacement à un autre peut être jugé trop long pour certaines applications).

Le mode de pointage absolu fait quant à lui intervenir, au niveau de la source de commande, une surface sensible (par exemple une surface tactile) de dimensions finies dont la forme est en correspondance isomorphique (voire même homothétique) avec une zone d'affichage pouvant consister en tout ou partie de l'écran.

Selon ce mode de pointage, pour amener le curseur sur un point déterminé de l'écran, il suffit d'indiquer sur la surface sensible l'emplacement qui se trouve en correspondance avec ledit point.

Il s'avère que ce mode de pointage, qui ne permet pas à l'opérateur de travailler véritablement en aveugle, est plus rapide mais ne permet pas d'atteindre facilement une bonne précision : l'obtention d'un point précis implique fréquemment un tâtonnement plus ou moins long. C'est la raison pour laquelle ce mode est le plus souvent utilisé pour sélecter des zones déterminées de l'écran affectées par exemple à des valeurs ou à des fonctions.

On constate donc que les deux modes de pointage précédemment évoqués sont complémentaires dans ce sens que les avantages de l'un suppriment les inconvénients de l'autre et inversement.

DE-A-30 36 947 décrit un dispositif dans lequel un pointeur permet d'indiquer les coordonnées relatives ou absolues d'un point dans l'espace. Ce dispositif utilise un pointeur qui émet un signal et des récepteurs disposés autour de la surface de travail. Le pointeur présente un commutateur permettant de passer d'un système à l'autre de coordonnées. Néanmoins seulement un des modes (mode relatif) est réellement indiqué par le pointeur, l'autre est obtenu par calcul.

L'invention tire parti de cette constatation et propose, en vue de cumuler les avantages des deux solutions précédemment évoquées, un dispositif de gestion de curseur pouvant fonctionner selon l'un ou l'autre des susdits modes et passer de l'un à l'autre de ces modes, à la suite d'une action de commande s'intégrant d'une façon parfaite à l'ergonomie d'ensemble du système.

En vue de parvenir à ces résultats, ce dispositif de gestion fait intervenir une source de commande consistant en une tablette tactile du type comprenant une surface tactile et des moyens permettant de détecter une force exercée sur ladite surface.

Selon l'invention, ce dispositif est caractérisé en ce qu'il comprend des moyens de sélection permettant de passer de l'un à l'autre des deux modes de pointage, selon que la force exercée est supérieure ou inférieure à une valeur de seuil prédéterminée.

Avantageusement, en l'absence de force exercée sur la surface tactile, ou lorsque cette pression demeure en-dessous du susdit seuil, les moyens de sélection sélectionent le mode de pointage relatif, tandis que, lorsque la force s'élève au-dessus du susdit seuil, les moyens de sélection sélectionent le mode de pointage absolu.

Grâce à une telle disposition, l'opérateur peut notamment placer rapidement le curseur dans une zone de l'écran, en exerçant une pression sur la tablette tactile (mode de pointage absolu) puis déplacer ce curseur avec la précision offerte par le mode relatif, en déplaçant son doigt tout en relâchant la pression.

Bien entendu, l'opérateur pourrait également rester en mode absolu en déplaçant son doigt tout en maintenant sur la surface tactile une pression supérieure au susdit seuil.

Cette combinaison de deux modes de pointage, a priori peu compatibles, s'avère donc particulièrement avantageuse.

Un mode d'exécution de l'invention sera décrit ci-après, à titre d'exemple non limitatif, avec référence aux dessins annexés, dans lesquels :

La figure 1 est une représentation schématique d'une surface tactile et d'un écran, permettant d'illustrer le principe du mode de pointage de type absolu.

La figure 2 est une vue similaire à celle de la figure 1 mais permettant d'illustrer le principe du mode de pointage de type relatif.

La figure 3 est une représentation schématique d'une tablette tactile utilisable dans le dispositif selon l'invention.

La figure 4 est un algorithme de sélection du mode de pointage réalisé par la tablette tactile.

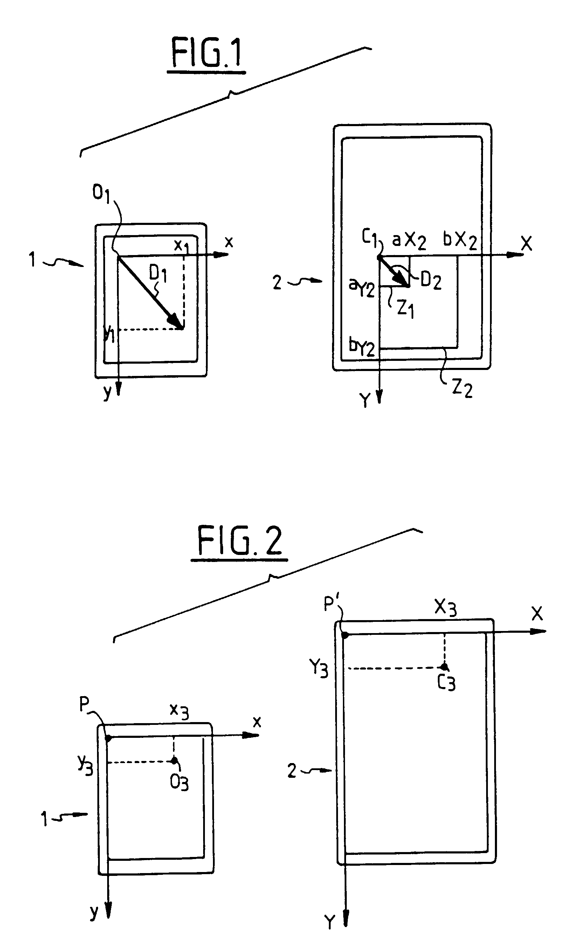

Dans les exemples illustrés figures 1 et 2, on a représenté schématiquement la surface tactile 1 et l'écran 2 par deux rectangles respectifs, celui de l'écran présentant des dimensions plus importantes que celui de la surface tactile.

La surface tactile 1 peut être de type classique, par exemple, de type capacitif, résistif, optique, piézoélectrique, etc...

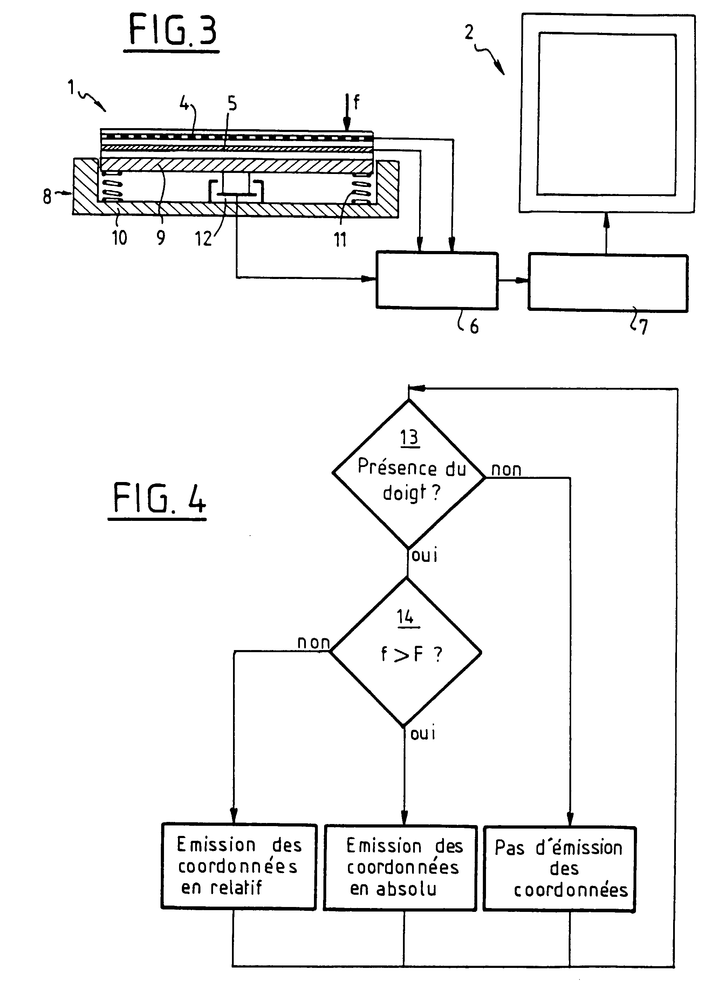

Dans l'exemple représenté figure 3, elle fait intervenir deux nappes d'électrodes superposées, formant une multiplicité de condensateurs élémentaires formant chacun un point de détection.

Ces électrodes sont reliées les unes aux autres par deux séries de liaisons conductrices selon une configuration matricielle, les liaisons reliant les électrodes de l'une des nappes constituant les lignes 4, les liaisons associées à l'autre nappe formant les colonnes 5 et les condensateurs élémentaires étant situés aux intersections entre les lignes 4 et les colonnes 5.

Ces lignes 4 et ces colonnes 5 sont reliées à un circuit électronique de détection 6 qui est couplé à un calculateur 7 qui assure la gestion de l'écran 2.

Le circuit électronique 6 est conçu de manière à appliquer cycliquement, sur les lignes 4 et les colonnes 5, un signal électrique et à détecter, pour chaque paire ligne/colonne, une variation éventuelle de ce signal électrique, occasionnée par la présence d'un objet électriquement conducteur, à proximité du condensateur élémentaire formé à l'intersection de cette ligne 4 et de cette colonne 5.

Bien entendu, la détection d'une telle variation de signal permet la localisation de l'objet (ou du doigt de l'opérateur) dans un repère de coordonnées cartésiennes lié à la surface tactile.

En mode de pointage relatif (figure 1), le calculateur 7 détermine chacun des déplacements de l'objet sur la surface tactile, dans un repère d'axes 0₁x, 0₁y ayant pour origine O₁ le point de départ du déplacement (flèche D₁).

Le calculateur 7 est en outre conçu de manière à déterminer un déplacement D₂ correspondant du curseur C₁ affiché à l'écran 2, dans un repère d'axes C₁X, C₁Y ayant pour origine la position initiale de ce curseur C₁, ce déplacement D₂ se déduisant du déplacement D₁ de l'objet, par une homothétie.

Un avantage important de ce mode de pointage consiste en ce qu'il permet d'obtenir différents niveaux de précision, la zone de l'écran 2 gérée par la totalité de la surface tactile 1 pouvant être plus ou moins restreinte, ou couvrir éventuellement la totalité de l'écran.

Cette particularité est illustrée sur la figure 1 dans laquelle on a indiqué, en traits interrompus, deux zones Z₁ (aX₂,aY₂) - Z₂ (bX₂, bY₂) pouvant être gérées par la totalité de la surface tactile 1.

En mode de pointage absolu (figure 2), le calculateur 7 exprime les coordonnées x₃, y₃ de l'objet O₃ dans un repère d'axes Px, Py ayant pour origine un point fixe P de la surface tactile, (par exemple le coin supérieur gauche de cette surface tactile). De ces coordonnées x₃, y₃, il en déduit les coordonnées X₃, Y₃ de la position du curseur dans un repère d'axes P'X, P'Y ayant lui-même pour origine un point fixe P' de l'écran 2 (par exemple le coin supérieur gauche de l'écran).

Selon ce mode de pointage, pour déplacer le curseur C₃ vers un point de l'écran, il suffit de placer l'objet O₃ (par exemple le doigt) sur le point de la surface tactile qui se trouve en correspondance isomorphique avec l'image du point à l'écran 2.

Comme précédemment mentionné, en vue de combiner les avantages des deux modes de pointage précédemment décrits, l'invention propose d'utiliser, en tant que source de commande, une tablette tactile 8 comprenant, comme représenté figure 3, une structure de support 9 mobile présentant une surface plane, rigide, montée sur une structure fixe 10 par l'intermédiaire d'un système de mesure d'effort faisant intervenir, entre ces deux structures, des ressorts 11 et un capteur de déplacement 12.

La surface plane de la structure mobile est recouverte de la surface tactile 1 précédemment décrite.

Le système de mesure d'effort sert ici à effectuer une sélection de mode de pointage assuré par la tablette tactile : ainsi, dans le cas où la pression exercée sur la tablette tactile 8 est nulle ou est inférieure à une valeur de seuil F prédéterminée, le calculateur 7 effectue l'émission des coordonnées en mode relatif (mode de pointage relatif).

Par contre, lorsque l'opérateur exerce sur la tablette tactile 8 une pression f supérieure à la valeur de seuil, le capteur 12 transmet un signal provoquant le passage du mode de pointage relatif au mode de pointage absolu et calcule donc les coordonnées en mode absolu.

Ce processus de sélection est illustré sur l'algorithme de la figure 4 dans lequel :
- le branchement conditionnel 13 marque la phase de détection de la présence ou de l'absence d'un objet par exemple le doigt de l'opérateur sur la tablette tactile 8 :
   . dans le cas d'une absence, le calculateur 7 interrompt l'émission des coordonnées,
   . dans le cas d'une présence, le calculateur 7 effectue une sélection du mode de pointage grâce à un branchement conditionnel 14,
- le branchement conditionnel 14 qui compare la force f appliquée à la tablette tactile 8 à une valeur de seuil F, et
   . dans le cas où la force f est inférieure à la valeur F, provoque le passage du calculateur en mode de pointage relatif, et
   . dans le cas où la force f est supérieure à la valeur F, provoque le passage du calculateur en mode de pointage absolu.

Bien entendu, le dispositif de gestion précédemment décrit pourra en outre faire intervenir des moyens de validation permettant notamment de valider l'information indiquée par le pointeur en mode de pointage relatif. Ces moyens de validation pourront être éventuellement prévus sur la tablette tactile 8.

## Revendications

1. Dispositif de gestion multimode d'un curseur sur l'écran d'un dispositif d'affichage associé à un processeur, apte à passer d'un mode de pointage relatif à un mode de pointage absolu, ce dispositif faisant intervenir une source de commande consistant en une tablette tactile (8) comprenant une surface tactile (1) et des moyens (11, 12), permettant de détecter une force (f) exercée sur ladite surface (1),
caractérisé en ce qu'il comprend des moyens de sélection permettant de passer de l'un à l'autre des deux modes de pointage selon que la force (f) exercée est supérieure ou inférieure à une valeur de seuil prédéterminée (F).

2. Dispositif selon la revendication 1,
caractérisé en ce que, en l'absence de force (f) exercée sur la surface tactile (1), ou lorsque cette pression demeure au-dessous du susdit seuil (F), les moyens de sélection sélectionnent le mode de pointage relatif, tandis que, lorsque ladite force s'éléve au-dessus du susdit seuil (F), les moyens de sélection sélectionnent le mode de pointage absolu.

3. Dispositif selon l'une des revendications 1 et 2,
caractérisé en ce qu'il comprend en outre des moyens de validation incorporés ou non à la surface tactile (1).

4. Dispositif selon l'une des revendications précédentes,
caractérisé en ce qu'il comprend des moyens permettant au calculateur (7) d'interrompre l'émission des coordonnées émanant de la tablette tactile (8), en l'absence de détection d'un objet sur la surface tactile (1).

## Patentansprüche

1. Vorrichtung zur Multimode-Steuerung eines Cursors auf dem Bildschirm einer einem Prozessor zugeordneten Anzeigevorrichtung, die von einem relativen Markiermodus in einen absoluten Markiermodus übergehen kann, wobei diese Vorrichtung eine Steuerquelle verwendet, die aus einem Tastplättchen (8) besteht, das eine Tastfläche (1) und Mittel (11, 12) aufweist, die es ermöglichen, eine Kraft (f) zu erfassen, die auf die Fläche (1) ausgeübt wird,
dadurch gekennzeichnet, daß sie Auswahlmittel aufweist, die es ermöglichen, von einem der beiden Markiermodi zum anderen zu wechseln, je nachdem, ob die ausgeübte Kraft (f) größer oder kleiner als ein vorbestimmter Schwellwert (F) ist.

2. Vorrichtung nach Anspruch 1, dadurch gekennzeichnet, daß in Abwesenheit einer auf die Tastfläche (1) ausgeübten Kraft (f) oder wenn dieser Druck unter dem Schwellwert (F) bleibt, die Auswahlmittel den relativen Markiermodus wählen, während, wenn die Kraft über dem Schwellwert (F) liegt, die Auswahlmittel den absoluten Markiermodus wählen.

3. Vorrichtung nach einem der Ansprüche 1 und 2, dadurch gekennzeichnet, daß sie weiter Validierungsmittel aufweist, die in die Tastfläche (1) eingebaut sind oder nicht.

4. Vorrichtung nach einem der vorhergehenden Ansprüche, dadurch gekennzeichnet, daß sie Mittel aufweist, die es dem Rechner (7) ermöglichen, in Abwesenheit der Erfassung eines Gegenstands auf der Tastfläche (1) die Ausgabe der vom Tastplättchen (8) stammenden Koordinaten zu unterbrechen.

## Claims

1. A device for multimode management of a cursor on the screen of a display device associated with a processor, capable of switching from a relative pointing mode to an absolute pointing mode, said device using a control source consisting in a touch-sensitive work board (8) comprising a touch-sensitive surface (1) and a means (11, 12) enabling detection of a force (f) exerted on said surface (1),
characterized in that it comprises a selection means enabling switching from said relative pointing mode to said absolute pointing mode depending on whether the force (f) exerted exceeds or is less than a predetermined threshold value (F).

2. The device as claimed in claim 1,
characterized in that, in the absence of force (f) exerted on said touch-sensitive surface (1), or when this pressure remains below said threshold (F), the selection means selects the relative pointing mode, whereas when the force rises above said threshold, the selection means selects the absolute pointing mode.

3. The device as claimed in one of claims 1 and 2,
characterized in that it further comprises a validation means incorporated or not into said touch-sensitive surface (1).

4. The device as claimed in one of the preceding claims,
characterized in that it comprises a means enabling the computer (7) to interrupt the transmission of the coordinates coming from said touch-sensitive work board (8) if no object is detected on said touch-sensitive surface (1).
